# EUROPÄISCHE PATENTSCHRIFT

(11) **EP 1 718 435 B1**
(45) Veröffentlichungstag und Bekanntmachung des Hinweises auf die Patenterteilung: **23.05.2007**
(21) Anmeldenummer: 05700354.3
(22) Anmeldetag: 03.02.2005
(51) Int. Cl.: B24B 41/04, B24B 41/00, B24B 49/00, B23Q 5/04, B23Q 11/00, B23Q 17/20, B23Q 39/02, B23Q 1/01

(54) **BEARBEITUNGSMASCHINE ZUM BEARBEITEN VON WERKST CKEN**
MACHINE TOOL FOR MACHINING WORKPIECES
MACHINE D'USINAGE POUR USINER DES PIECES

(30) Priorität: 25.02.2004 CH 314042004
(43) Veröffentlichungstag der Anmeldung: 08.11.2006
(73) Patentinhaber: Fritz Studer AG, 3612 Steffisburg (CH)
(72) Erfinder: TANNER, Hans, CH-3626 Hünibach (CH)
(74) Vertreter: Seehof, Michel
(86) Internationale Anmeldenummer: PCT/CH2005/000059
(87) Internationale Veröffentlichungsnummer: WO 2005/080048

(56) Entgegenhaltungen:
- DE-A- 3 521 218
- FR-A- 1 533 958
- US-A- 4 545 271

## Beschreibung

Die vorliegende Erfindung bezieht sich auf eine Bearbeitungsmaschine zum Bearbeiten von Werkstücken gemäss Oberbegriff vom Anspruch 1. Eine solche Maschine ist aus DE 35 21 218 A bekannt.

Im deutschen Gebrauchsmuster Nr. 201 05 430.2 ist eine Bearbeitungsmaschine mit einer Schleifvorrichtung und einer Werkstückhaltevorrichtung beschrieben. Die Werkstückhaltevorrichtung hat den Nachteil, dass aufgrund der Anordnungskonzeption keine Messgeräte einsetzbar sind, wie sie beim präzisen Rundschleifen mittels Inprocess-Messsteuerung erforderlich sind. Die Werkstückhaltevorrichtung ist daher für ein Erreichen enger Fertigungstoleranzen ungeeignet. Im Weiteren ist sie zwischen der Bearbeitungs- und Werkstückaufnahmestation verfahrbar ausgebildet. Der Verfahrweg der Werkstückhaltevorrichtung ist jedoch wesentlich länger, als zur eigentlichen Bearbeitung des Werkstücks notwendig wäre. Die Bearbeitungsmaschine weist dadurch ein erheblich verlängertes Maschinenbett auf und ist entsprechend teuer und aufwendig in der Herstellung.

Die Schleifvorrichtung gemäss dem oben genannten Gebrauchsmuster umfasst zwei Schleifwerkzeuge, die an gegenüberliegenden Enden einer angetriebenen Welle angebracht sind, und ist verschwenkbar ausgebildet, sodass ein Werkstück alternativ mit einem der beiden Schleifwerkzeuge bearbeitbar ist. Nachteilig daran ist, dass die Schleifwerkzeuge nur in schräggestellter Lage einsetzbar sind, da sie bei senkrechter Ausrichtung mit der Werkstückhaltevorrichtung kollidieren könnten. Dadurch sind Arbeiten, die eine senkrechte Ausrichtung des Schleifwerkzeuges erfordern wie die Bearbeitung von Nuten nicht durchführbar. Nachteilig ist auch, dass die verschwenkbare Schleifvorrichtung einen erheblichen Platzbedarf hat und teuer ist.

Im Weiteren sind bei der Bearbeitungsmaschine, wie sie in dem oben genannten Gebrauchsmuster beschrieben ist, keine besonderen Massnahmen vorgesehen, um die unterhalb des Werkstückes angeordneten Schleif- und Drehwerkzeuge vor Ablagerungen von Material zu schützen, welches beispielsweise in Form von Spänen bei der Bearbeitung eines Werkstücks anfällt.

Ausgehend von diesem Stand der Technik liegt eine Aufgabe der vorliegenden Erfindung darin, eine Bearbeitungsmaschine der eingangs erwähnten Art derart weiterzuentwickeln, dass sie eine präzisere Bearbeitung von Werkstücken ermöglicht.

Diese Aufgabe wird durch eine Bearbeitungsmaschine gemäss Anspruch 1 gelöst. Die weiteren Ansprüche geben bevorzugte Ausführungen an.

Die erfindungsgemässe Bearbeitungsmaschine hat u.a. den Vorteil, dass sie z.B. einsetzbar ist, um ein Werkstück in derselben Aufspannung durch präzises Rundschleifen und Drehen zu bearbeiten.

Die Erfindung wird im Folgenden anhand eines Ausführungsbeispiels unter Bezugnahme auf Figuren erläutert. Es zeigen
Fig. 1 eine perspektivische Ansicht einer Bearbeitungsmaschine mit erfindungsgemässen Schleifvorrichtungen sowie einer erfindungsgemässen Werkstückhaltevorrichtung;
Fig. 2 die Bearbeitungswerkzeuge der Bearbeitungsmaschine gemäss Fig. 1 in einer Schnittansicht von vorne;
Fig. 3 eine teilweise geschnittene Seitenansicht der Bearbeitungsmaschine gemäss Fig. 1 zusammen mit der äusseren Schutzverkleidung; und
Fig. 4 eine weitere Ausführungsform der Bearbeitungswerkzeuge für eine erfindungsgemässe Bearbeitungsmaschine in einer Schnittansicht von vorne.

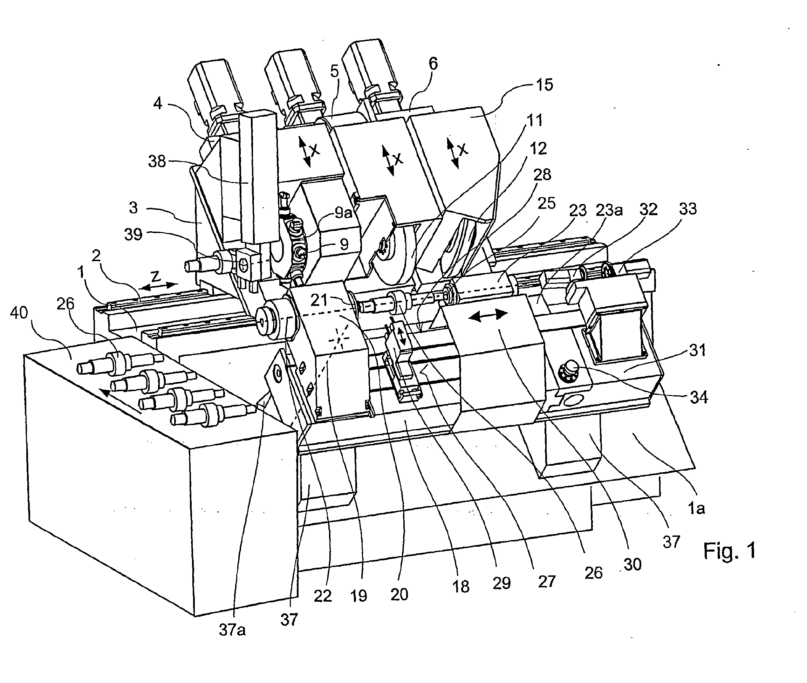

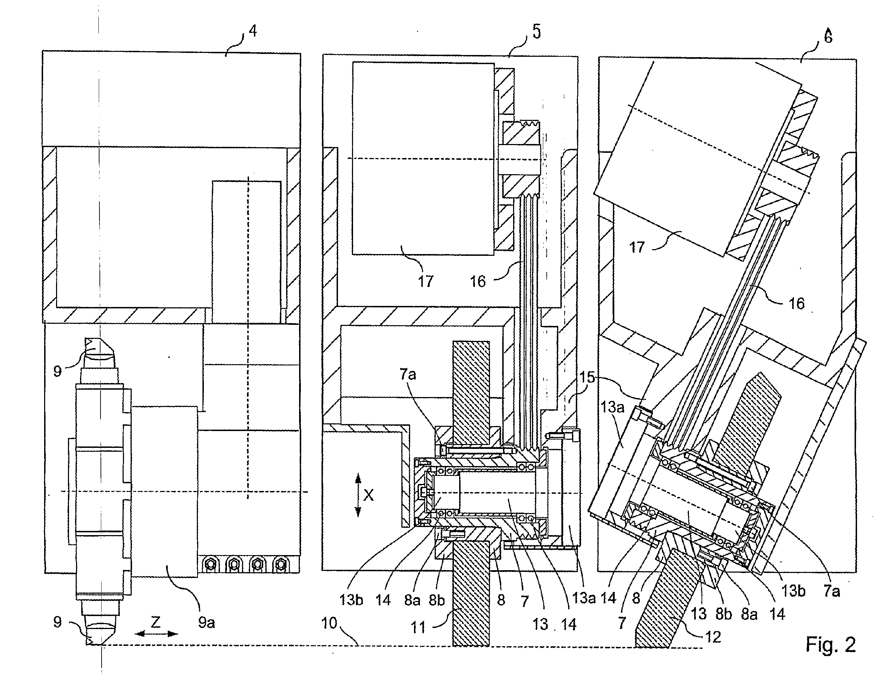

Wie aus Fig. 1 ersichtlich, umfasst die Bearbeitungsmaschine ein Maschinenbett 1 mit horizontalen Längsführungen 2 und einen Schlitten 3. Der Schlitten 3 ist entlang den Längsführungen 2 in Z-Richtung verfahrbar, wie dies durch den Doppelpfeil Z in der Fig. 1 angedeutet ist. An der frontseitigen Längsseite des Schlittens 3 sind nebeneinander Werkzeugeinheiten 4, 5, 6 angeordnet, welche die Bearbeitungswerkzeuge 9, 11, 12 zur Bearbeitung eines Werkstücks 26 enthalten. Die Werkzeugeinheiten 4, 5, 6 sind parallel zueinander angeordnet, sodass die Werkzeugachsen der jeweiligen Bearbeitungswerkzeuge 9, 11, 12 koaxial zur Z-Richtung sind. (Vgl. auch das Bezugszeichen 10 in der Fig. 2, welche die Lage der Werkzeugachsen in der Ruhestellung der drei Bearbeitungswerkzeuge 9, 11, 12 zeigt.) Weiter sind die Bearbeitungswerkzeuge 9, 11, 12 jeweils auf einem Werkzeugzustellschlitten angebracht, der quer zur Z-Richtung verfahrbar ist, wie dies durch den Doppelpfeil X in der Fig. 1 angedeutet ist. Die X- und Z-Richtung sind orthogonal zueinander. Durch Verfahren in X- und Z-Richtung-können die Bearbeitungswerkzeuge 9, 11, 12 in Kontakt mit der zu bearbeitenden Fläche des Werkstücks 26 gebracht werden.

Im Beispiel gemäss Fig. 1 ist die erste Werkzeugeinheit 4 als Drehvorrichtung zur spanenden Bearbeitung des Werkstücks 26 ausgebildet, die Werkzeugeinheiten 5 und 6 sind jeweils Schleifvorrichtungen, die zum Rundschleifen eines Werkstücks 26, insbesondere Aussenrund- und Planschleifen, geeignet sind.

Wie auch Fig. 2 zeigt, umfasst die Drehvorrichtung 4 einen Drehwerkzeugrevolver 9a, auf welchem Drehwerkzeuge 9 angeordnet sind. Durch Drehen des Drehwerkzeugrevolvers 9a kann das für den jeweiligen Bearbeitungsvorgang erforderliche Drehwerkzeug 9 zur Verfügung gestellt werden.

Die Schleifvorrichtungen 5 und 6 umfassen jeweils ein Schleifwerkzeug 11 bzw. 12 in Form einer Schleifscheibe, welche mittels Halterung 8, 8a, 8b auf einem Werkzeugträger 7 gehalten ist, sowie eine feststehende (mechanische) Achse 13, um welche das Schleifwerkzeug 11 bzw. 12 rotierbar ist.

Die Halterung umfasst ein zylinderförmiges Halteteil 8 mit einem endseitigen Anschlag zur Aufnahme des Schleifwerkzeugs 11 bzw. 12 und ein ringförmiges Kopfteil 8b. Dieses ist mittels lösbarer Verbindung 8a z.B. in Form von Verschraubungen am Halteteil 8 befestigt, sodass das Schleifwerkzeug 11 bzw. 12 zwischen dem Anschlag des Halteteils 8 und dem Kopfteil 8b festgeklemmt ist. Die Halterung 8, 8a, 8b und das Schleifwerkzeug 11 bzw. 12 bilden eine auswechselbare Einheit, welche am Werkzeugträger mittels lösbarer Verbindung 7a z.B. in Form von Verschraubungen befestigt ist.

Der Werkzeugträger 7 umfasst eine Hülse, welche durch Lagermittel 14 auf der stehenden Achse 13 rotierbar gelagert ist. Als Lagermittel 14 eignen sich Wälzlager, insbesondere Kugellager, welche jeweils endseitig auf dem freistehenden Teil der stehenden Achse 13 angeordnet sind. Das Schleifwerkzeug 11 bzw. 12 ist innerhalb der freistehenden Länge der stehenden Achse 13 angeordnet, wodurch ein kompakter Aufbau gewährleistet ist. Insbesondere ist die seitliche Ausdehnung der Schleifvorrichtung 5 bzw. 6, d.h. in Z-Richtung, relativ schmal. Dies erlaubt es, die Werkzeugeinheiten 4, 5 und 6, insbesondere die beiden Schleifvorrichtungen 5 und 6, nahe zueinander anzuordnen, sodass ein relativ geringer Verfahrweg des Schlittens 3 in Z-Richtung erforderlich ist, um das jeweilige Bearbeitungswerkzeug 9, 11 bzw. 12 dem Werkstück 26 zustellen zu können. Im Weiteren ist es durch diese kompakte Bauweise auch möglich, das Schleifwerkzeug gegenüber der X-Richtung geneigt anzuordnen, um so ein Werkstück 26 durch Planschleifen von Seitenflächen als auch durch Aussenrundschleifen bearbeiten zu können. Im Beispiel gemäss Fig. 2 ist die Schleifvorrichtung 6 in Bezug auf die Schleifvorrichtung 5 bzw. Werkzeugachse 10 unter einem Winkel angeordnet, sodass mittels des Schleifwerkzeugs 12 auch Seitenflächen des Werkstücks 26 bearbeitbar sind.

Wie Fig. 2 weiter zeigt, ist die stehende Achse 13 auf der einen Seite 13a fest mit dem Werkzeugkasten 15 verbunden z.B. durch Festschrauben, das andere Ende 13b der Achse 13 ist freistehend. Diese Anordnung ermöglicht eine einfache Demontage des Schleifwerkzeugs 11 bzw. 12, indem die Verbindungen 7a gelöst werden und die Halterung 8, 8a, 8b zusammen mit dem Schleifwerkzeug 11 bzw. 12 über das freistehende Ende 13b der Achse 13 hinweg geführt wird. Beim Wechsel des Schleifwerkzeugs 11 bzw. 12 bleiben somit die Lagermittel 14 an Ort und Stelle und werden nicht ausgetauscht.

Es ist auch denkbar, die stehende Achse 13 an beiden Seiten 13a und 13b mit dem Werkzeugkasten 15 zu verbinden, sodass das Schleifwerkzeug 11 bzw. 12 dazwischen angeordnet ist. Auch diese Anordnung hat den Vorteil der geringen seitlichen Ausdehnung, jedoch ist die Demontage des Schleifwerkzeugs erschwert, da zusätzlich eine zumindest teilweise Demontage des Werkzeugkastens 15 und/oder der stehenden Achse 13 erforderlich ist.

Zum Antreiben des Schleifwerkzeugs 11 bzw. 12 dient jeweils ein Antrieb 17, der seitlich versetzt zur stehenden Achse 13 angeordnet ist, beim Beispiel gemäss Fig.-2-oberhalb der stehenden Achse 13. Die Kraftübertragung erfolgt mittels eines Keilriemens 16, der zwischen dem Ende 13a der stehenden Achse 13 und dem Schleifwerkzeug 11 bzw. 12 angeordnet ist, sodass der Werkzeugträger 7 an die Antriebswelle des Antriebs 17 gekoppelt ist. Als Antrieb 17 ist z.B. ein Drehstrommotor geeignet.

Zurückkommend auf Fig. 1, zeigt diese weiter eine Werkstückhaltevorrichtung, welche einen Werkstückspindelstock 20 und einen Reitstock 23 sowie einen Balken 18 als Träger umfasst. Zum Halten sowie Antreiben eines Werkstücks 26 ist der Werkstückspindelstock 20 mit Haltemitteln 21 wie einer zentrierspitze oder einem Spannfutter versehen. Der Reitstock 23 weist eine Gegenspitze 25 auf zum Halten sowie Spannen des Werkstücks 26 und ist auf einem Schlitten 23a befestigt, welcher entlang Führungen verschiebbar ist, um die Distanz zwischen den Haltemitteln 21 und der Gegenspitze 25 an die Länge des Werkstücks 26 anpassen zu können. (Vgl. das Bezugszeichen 24, welche die Führungen bezeichnet.) Zur Bearbeitung wird das Werkstück 26 zwischen den Haltemitteln 21 und der Gegenspitze 25 gespannt und um die Werkstückachse 22 in Rotation versetzt, welche durch die Spindeldrehachse des Werkstückspindelstocks 20 gegeben ist.

Der Träger 18 ist um eine Verschwenkachse 19 verschwenkbar, welche quer zur Z-Richtung bzw. zur Werkzeugachse 10 ist, wobei die beiden Achsen 10 und 19 vorzugsweise orthogonal zueinander sind. Durch Verschwenken des Trägers 18 kann die Werkstückachse 22 in Bezug auf die Werkzeugachse 10 präzise ausgerichtet werden, beispielsweise zur Zylinderfehlerkompensation, sodass ein genaues Bearbeiten von insbesondere wellenförmigen Werkstücken 26 gewährleistet ist. Falls nötig, können durch geeignetes Verschwenken des Trägers 18 nebst zylindrischen auch konische Flächen am Werkstück 26 bearbeitet werden.

Der Werkstückspindelstock 20 ist an der Vorderseite 27 des Trägers 18 befestigt, während der Reitstock 23 an einer von der Vorderseite 27 verschiedenen Seite des Trägers 18 angebracht ist, welche im Beispiel gemäss Fig. 1 der Oberseite 28 des Trägers 18 entspricht. Es sind auch andere Varianten möglich, Werkstückspindelstock 20 und Reitstock 23 an verschiedenen Seiten des Trägers 18 anzubringen: beispielsweise den Reitstock 23 an der Rückseite des Trägers 18 und den Werkstückspindelstock 20 an der Vorderseite 27 oder den Reitstock 23 an der Vorderseite 27 und den Werkstückspindelstock 20 an der Oberseite 28 oder Rückseite des Trägers 18. Das Anbringen von Werkstückspindelstock 20 und Reitstock 23 an verschiedenen Seiten hat den Vorteil, dass an der Seite 27, an welcher der Werkstückspindelstock 20 angebracht ist, weitere Einrichtungen 29 anbringbar sind, ohne dass sie mit dem Reitstock 23 kollidieren, wenn dieser verschoben wird.

Im Beispiel gemäss Fig. 1 ist an der Vorderseite 27 des Trägers 18 als weitere Einrichtung eine Messeinrichtung 29 angebracht, welche zum Erfassen von Messgrössen dient, insbesondere während der Bearbeitung eines Werkstücks 26. Die Messeinrichtung 29 umfasst Messgeräte zum Erfassen von Durchmesser und bestimmten Längen am Werkstück 26 und ist entlang der Vorderseite 27 verschiebbar angeordnet. Die Messgeräte und das Schleifwerkzeug 11 bzw. 12 können gleichzeitig mit dem Werkstück 26 in Kontakt gebracht werden ohne Gefahr einer Kollision untereinander oder mit dem Werkstückspindelstock 20 oder dem Reitstock 23. Dadurch ist ein präzises Schleifen mittels Inprocess-Messsteuerung möglich, bei welcher während der Bearbeitung eines Werkstücks 26 mit der Messeinrichtung 29 Messdaten erfasst werden, um entsprechend den zu erreichenden Abmessungen des Werkstücks 26 die Position des Schleifwerkzeugs 11 bzw. 12 zu steuern.

Der Träger 18 umfasst Schutzmittel 30, mit welchen die Messgeräte der Messeinrichtung 29 geschützt werden können. Die Schutzmittel 30 umfassen beispielsweise einen abgewinkelten Deckel, der entlang des Trägers 18 translatorisch verschiebbar ist. Es ist auch möglich, einen auf- und zuklappbaren Schutzdeckel als Schutzmittel 30 zu verwenden. Die Schutzmittel 30 dienen dazu, die Messgeräte der Messeinrichtung 29 vor Beschädigungen zu schützen, beispielsweise dann, wenn das Werkstück 26 mit dem Drehwerkzeug 9 bearbeitet wird. Beim diesem Bearbeitungsvorgang werden glühende Drehspäne erzeugt, welche ohne Vorsehen der Schutzmittel 30 die sensiblen Messgeräte der Messeinrichtung 29 beschädigen würden.

Der in der Fig. 1 gezeigte Träger 18 ist in Form eines Balkens mit einem rechteckigen Querschnitt ausgebildet, sodass die Vorderseite 27 und die Oberseite 28 rechtwinklig zueinander liegen. Ein Balken mit einem anderen Querschnitt, beispielsweise drei- oder mehreckig wäre auch als Träger 18 geeignet, um den Werkstückspindelstock 20 und den Reitstock 23 an verschiedenen Seiten anbringen zu können.

Anschliessend an den Trägerbalken 18 ist ein mit dem Maschinenbett 1 fest verbundener Trägerkasten 31 angeordnet, an dessen Vorderseite Abrichtwerkzeuge 32 und 33 befestigt sind. Diese dienen zum Abrichten der Schleifwerkzeuge 11 und 12. Der Werkstückspindelstock 20, die Messeinrichtung 29 sowie die Abrichtwerkzeuge 32 und 33 sind somit dem Benutzer zugewandten Seite angeordnet.

Eine Feinverstellvorrichtung 34, welche sich im Trägerkasten 31 befindet, dient zum Verschwenken des Trägers 18 um die Verschwenkachse 19, um, wie oben beschrieben, die Werkstückachse 22 entsprechend der geforderten Konizität am Werkstück 26 ausrichten zu können.

Das Maschinenbett 1 ist als Schrägbett ausgebildet, wozu die vordere Fläche 1a gegenüber der Horizontalen geeignet angeordnet ist. An der Fläche 1a sind Konsolen 37, beispielsweise in Form von zwei, seitlich versetzten Auslegern, angebracht, auf welchen der Träger 18 befestigt ist. Der Träger 18 ist dadurch beabstandet zum Maschinenbett 1 angeordnet, sodass ein Durchlass gebildet ist und das während der Bearbeitung anfallende Material wie Späne, Kühlschmiermittel und dergleichen zwischen dem Maschinenbett 1 und Träger 18 nach unten fallen kann. Damit kein Material auf den Konsolen 37 liegen bleibt, sind deren oberen Flächen 37a abgeschrägt.

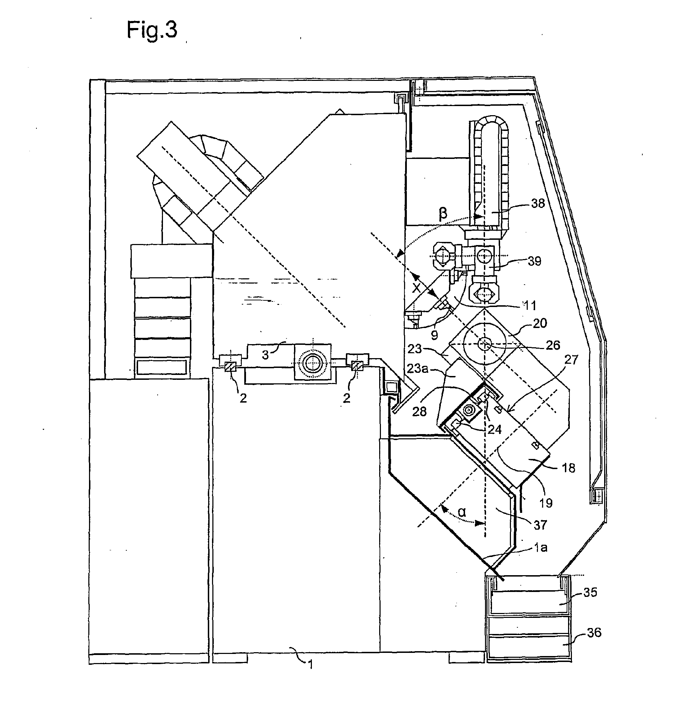

Wie insbesondere Fig. 3 zeigt, ist die Werkstückhaltevorrichtung 18, 20, 23 geneigt angeordnet, sodass diese weitgehend frei von horizontalen Flächen ist. Der Träger 18 ist um einen bestimmten Winkel α gegenüber der Vertikalen geneigt an den Konsolen 37 befestigt, sodass insbesondere seine Oberseite 28 und Vorderseite 27 sowie die Flächen des Werkstückspindelstocks 20 sowie Reitstocks 23 gegenüber der Horizontalen geneigt angeordnet sind. Der Winkel α beträgt vorzugsweise 45 Grad, er kann aber je nach Anwendungszweck auch grösser oder kleiner gewählt sein. Die Verschwenkachse 19 steht senkrecht auf der Vorderseite 27 des Trägers 18 und ist somit ebenfalls um den Winkel α gegenüber der Vertikalen geneigt.

Durch das Vorsehen von geneigten Flächen im Bearbeitungsraum, insbesondere jene die unterhalb der Bearbeitungswerkzeuge 4, 5, 6 angeordnet und diesen zugewandt sind wie die Flächen 1a, 27, 28 und 37a, kann das während der Bearbeitung anfallende Material nach unten geleitet werden. Bevorzugt sind alle Flächen im Bearbeitungsraum geneigt, insbesondere senkrecht, angeordnet, sodass das Material allseitig nach unten fallen kann und ein Liegenbleiben z.B. auf dem Träger 18, Werkstückspindelstock 20 oder Reitstock 23 weitgehend verhindert wird. Natürlich brauchen zum Ableiten des Materials die geneigten Flächen nicht eben zu sein, sondern können auch gekrümmt bzw. abgerundet sein.

Zum Auffangen des herunterfallenden Materials ist unten am Maschinenbett 1 eine Auffangvorrichtung vorgesehen, welche einen Späneförderer 35 und eine Kühlschmiermittelauffangwanne 36 umfasst. Mittels des Späneförderers 35 kann insbesondere das feste Material zu einer Endstelle abtransportiert werden.

Optional kann die Bearbeitungsmaschine mit Abstreifern versehen sein (nicht dargestellt), welche über bestimmte Flächen geführt werden können, um so daran anhaftendes Material abzustreifen. Beispielsweise sind solche Abstreifer einsetzbar, um den Reitstockschlitten 23a und die Konsolen 37 wiederkehrend zu säubern und so eine problemlose Verfahrbarkeit des Schlittens 23a zu gewährleisten.

Weiter können Schutzverkleidungen vorgesehen sein, um einzelne Komponenten vor Verschmutzungen insbesondere durch das bei der Bearbeitung anfallende Material zu schützen. Wie Fig. 2 zeigt, sind beispielsweise seitlich und unten am Werkzeugkasten 15 der Schleifvorrichtungen 5 und 6 Schutzverkleidungen angebracht, welche den Keilriemen 16 und den Antrieb 17 weitgehend vor Verschmutzungen schützt.

Die Werkzeugeinheiten 4, 5 und 6 sind geneigt angeordnet, wobei β den Winkel zwischen der Vertikalen und der X-Verfahrrichtung der Bearbeitungswerkzeuge 9, 11, 12 bezeichnet. Diese geneigte Anordnung hat u.a. den Vorteil, dass ein Bediener der Bearbeitungsmaschine ohne Bücken das Werkstück 26, insbesondere die Stellen, welche in Kontakt mit dem Bearbeitungswerkzeug 9, 11, 12 kommen, gut einsehen kann.

Zum Anordnen der Werkzeugeinheiten 4, 5 und 6 in einer geneigten Lage ist der Z-Schlitten 3 beispielsweise als Horizontalschlitten mit einer um den Winkel β geneigten Ebene ausgebildet, auf welcher die X-Schlitten der Werkzeugeinheiten 4, 5 und 6 angebracht sind. Alternativ kann der Z-Schlitten 3 auch als flacher Z-Schlitten ausgebildet sein, der in einer um den Winkel β geneigten Ebene verfahrbar ist, indem die beiden Führungen 2 in der Höhe versetzt angebracht sind. Die Z-Verfahrrichtung ist auch hier horizontal ausgerichtet, während der Winkel zwischen der Vertikalen und der X-Verfahrrichtung durch β gegeben ist.

Vorzugsweise ist der Winkel β gleich dem Winkel α. Das Schleifwerkzeug 11 bzw. 12 und die Messgeräte der Messeinrichtung 29 können dann ohne Gefahr einer Kollision an gegenüberliegenden Seiten auf das Werkstück 26 aufgesetzt werden.

Am vorderen Ende des Schlittens 3 ist eine Werkstückgreifervorrichtung 38 befestigt. Sie ist zusammen mit den Werkzeugeinheiten 4, 5, 6 in Z-Richtung verfahrbar. Die Werkstückgreifervorrichtung 38 weist einen Arm auf, dessen Ende mit einem Wechselgreifer 39 versehen ist. Mittels diesem kann u.a. ein bearbeitetes Werkstücks aus der Werkstückhaltevorrichtung entnommen und ein neues Werkstück übergeben werden, ohne dass ein Verschieben des Schlittens 3 erforderlich ist.

Wie Fig. 1 weiter zeigt, ist am linken Ende der Bearbeitungsmaschine ein Werkstückspeicher 40 vorgesehen, von welchem mittels der Werkstückgreifervorrichtung 38 Werkstücke 26 entnommen bzw. abgelegt werden können.

Ein möglicher Arbeitsablauf der Bearbeitungsmaschine ist wie folgt.

Das Werkstück, welches in der Werkstückhaltevorrichtung eingespannt ist und bereits bearbeitet ist, (im Folgenden mit A bezeichnet), wird mittels des Wechselgreifers 39 mit dem neu zu bearbeitenden Werkstück ausgetauscht (im Folgenden mit B bezeichnet). Der Schlitten 3 ist dabei an die rechte Endposition verfahren, sodass sich die Schleifwerkzeuge 11 und 12 in der Nähe der Abrichtwerkzeuge 32 und 33 befinden und bei Bedarf ohne grösseres Verfahren des Schlittens 3 abgerichtet werden können.

Das neu eingespannte Werkstück B wird mittels der Drehvorrichtung 4 und dann den Schleifvorrichtungen 5 und 6 bearbeitet, wobei je nach Bearbeitungsvorgang der Schlitten 3 entsprechend verfahren wird. Nach Beendigung des Schleifvorgangs befindet sich der Schlitten 3 an der linken Endposition, sodass mittels des Wechselgreifers 39 das im vorhergehenden Arbeitsgang bearbeitete Werkstück -A- im Werkstückspeicher 40 abgelegt und ein neu zu bearbeitendes Werkstück C aufgenommen werden kann.

Der Schlitten 3 wird verfahren und das bearbeitete Werkstück B mit dem Werkstück C ausgetauscht, womit der Arbeitsablauf von vorne beginnt.

Aus der oben beschriebenen Konzeption von Schleif- und Werkstückhaltevorrichtung als Teil einer Bearbeitungsmaschine ergeben sich verschiedene Vorteile:

Bei der Schleifvorrichtung 5 bzw. 6 ist der Werkzeugträger 7, welcher das Schleifwerkzeug 11 bzw. 12 trägt, durch Rotation um die stehende mechanische Achse 13 antreibbar. Dadurch wird ein kompakter Aufbau erzielt, wobei insbesondere die seitliche Ausdehnung relativ schmal ist. Dies ermöglicht es, weitere Werkzeugeinheiten parallel zur Schleifvorrichtung 5 bzw. 6 anzuordnen, um so mehrere Bearbeitungsschritte, insbesondere Drehen und Rundschleifen, in ein und derselben Aufspannung durchführen zu können. Ein zeitaufwändiges Umspannen des Werkstücks, neu Ausrichten und Fertigbearbeiten an einer anderen Bearbeitungsmaschine entfällt somit.

Die Bearbeitungsmaschine eignet sich zur Feinbearbeitung von Werkstücken, insbesondere auch von gehärteten Werkstücken (Hartfeinbearbeitung). Die Werkstücke können wellenförmig sein, beispielsweise solche für Getriebe, Pumpen, etc.; es sind aber auch konische und/oder plane Flächen bearbeitbar, wobei insbesondere Nuten geschliffen werden können. Die einzelnen Vorrichtungen zum Bearbeiten und Halten eines Werkstücks sind so angeordnet, dass Einsatzbeschränkungen aufgrund von Kollisionen vermieden werden.

Bei Bedarf können die Schleifwerkzeuge 11, 12 rasch und einfach von der stehenden Achse 13 entnommen werden, wobei lediglich die Verbindungen 7a gelöst zu werden brauchen. Ein Entfernen insbesondere der Lagermittel 14 oder des Keilriemens 16 ist für einen Wechsel des Schleifwerkzeugs 11, 12 nicht erforderlich.

Durch das Anbringen von Werkstückspindelstock 20 und Reitstock 23 an verschiedenen Seiten des Trägers 18 ist die Werkstückhaltevorrichtung so ausgelegt, dass der Reitstock 23 über die gesamte Werkstückeinspannlänge verschiebbar ist, ohne dass eine Kollision mit anderen Teilen wie Messeinrichtung 29, Abrichtwerkzeugen 32, 33, etc. auftreten kann.

Der Einsatz einer Messeinrichtung 29 erlaubt eine Inprocess-Messsteuerung, wodurch ein hochpräzises Rundschleifen möglich ist. Die Messeinrichtung 29 kann während dem Drehprozess gegen eine Beschädigung durch Drehspäne geschützt werden, sodass in derselben Aufspannung ein Werkstück durch Drehen und Schleifen bearbeitbar ist.

Die Bearbeitungswerkzeuge 9, 11, 12 können einzeln ohne kollisionsbedingte Einschränkungen, mit kurzen Verfahrwegen und in kurzen Span-zu-Span-Zeiten zum Einsatz gebracht werden.

Die Werkstückgreifervorrichtung 38 ist so angeordnet, dass der für die Bearbeitung eines Werkstücks notwendige Verfahrweg ausreicht, um den Transport eines Werkstücks zwischen dem Werkstückspeicher 40 und der Werkstückhaltevorrichtung zu ermöglichen. Die zeit zum Beladen der Bearbeitungsmaschine ist somit weitgehend in der Bearbeitungszeit der Werkstücke integriert.

Insgesamt erlaubt die kompakte Ausführung der Bearbeitungsmaschine die Bearbeitungszeit der Werkstücke und somit die Herstellungskosten zu reduzieren.

Art und Anzahl der Werkzeugeinheiten können je nach Einsatzzweck der Bearbeitungsmaschine festgelegt sein. Die Anzahl Schleifvorrichtungen 5 bzw. 6 kann z.B. eins, zwei oder mehr sein. Falls eine Bearbeitung durch Drehen nicht erforderlich ist, kann natürlich die Drehvorrichtung 4 weggelassen sein. Es ist auch möglich, eine oder mehrere Schleifvorrichtungen mit Standardspindeln vorzusehen, an welchen endseitig das Schleifwerkzeug angebracht ist.

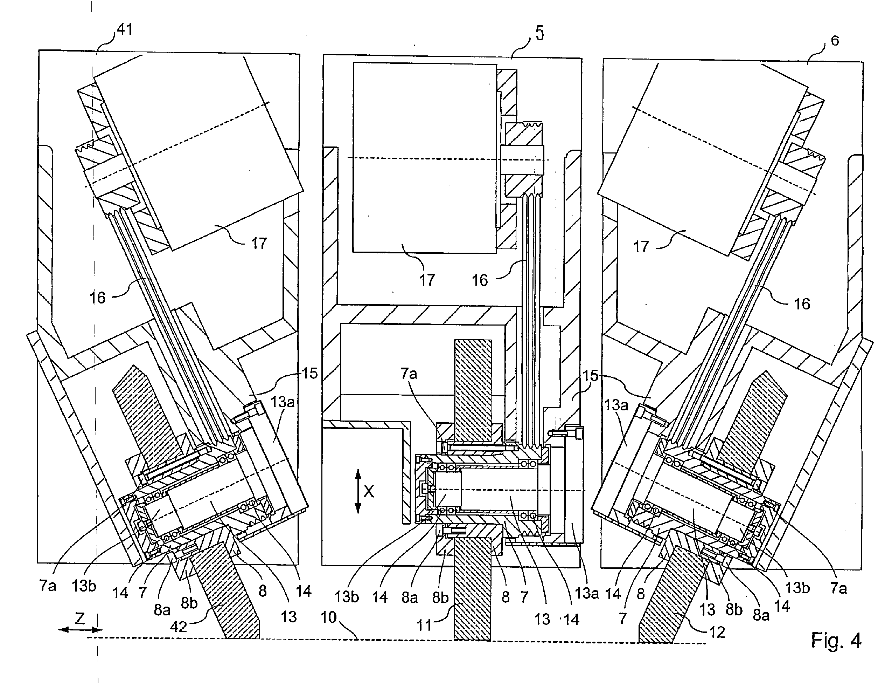

Fig. 4 zeigt ein Ausführungsbeispiel mit drei parallelen Schleifvorrichtungen 5, 6 und 41, wobei die Schleifvorrichtung 41 anstelle der Drehvorrichtung 4 oder neben dieser auf dem Schlitten 3 angeordnet sein kann.

Ähnlich wie bei den Schleifvorrichtungen 5 und 6 umfasst die Schleifvorrichtung 41 ein Schleifwerkzeug 42 in Form einer Schleifscheibe, welche mittels Halterung 8, 8a, 8b bzw. Verbindung 7a am Werkzeugträger 7 befestigt und um die stehende Achse 13 rotierbar ist.

Die Schleifvorrichtung 41 ist am Schlitten 3 in Bezug auf die mittlere Schleifvorrichtung 5 unter einem Winkel angeordnet und wie die Schleifvorrichtungen 5 und 6 in X- und Z-Richtung verfahrbar. Durch die beiden, zur Mitte hin geneigten Schleifscheiben 12 und 42 können somit sowohl dem Werkstückspindelstock 20 als auch dem Reitstock 23 zugewandten Seitenflächen eines Werkstücks in einer Aufspannung bearbeitet werden.

Es ist auch denkbar, die Bearbeitungsmaschine mit anderen und/oder weiteren Bearbeitungswerkzeugen zu versehen, um so am eingespannten Werkstück mehrere Bearbeitungsschritte durchführen zu können. Beispiele von derartigen Bearbeitungswerkzeugen sind solche zum Aussenrundschleifen, Innenrundschleifen, Planschleifen, Drehen, Bohren, Fräsen, Glattwalzen, für ein Superfinish, Honen, etc. Je nach Anwendungszweck können solche Bearbeitungswerkzeuge anstelle der Werkzeugeinheiten 4, 6, 41 oder in Kombination mit diesen vorgesehen sein.

In einer weiteren Ausführungsform der Bearbeitungsmaschine sind zwei oder mehr der Werkzeugeinheiten 4 bzw. 41, 5, 6 unabhängig voneinander in X- und Z-Richtung verfahrbar ausgebildet. Dies ermöglicht einen gleichzeitigen Eingriff am Werkstück 26 mit mehreren Werkzeugen, sodass die gesamte Bearbeitungszeit erheblich reduziert werden kann.

Beispielsweise sind anstelle des Schlittens 3 zwei getrennte Z-Schlitten vorgesehen, die in Z-Richtung verfahrbar sind. Auf dem ersten Z-Schlitten ist ein X-Schlitten mit der Schleifvorrichtung 41 angebracht und auf dem zweiten Z-Schlitten ein X-Schlitten mit der Schleifvorrichtung 6. Die beiden Schleifvorrichtungen 6 und 41 sind demnach auf Kreuzschlitten angeordnet und können unabhängig voneinander in X- und Y-Richtung verfahren werden.

Zur Bearbeitung werden die beiden Schleifwerkzeuge 6 und 41 gleichzeitig auf das Werkstück 26 aufgesetzt und seine Flächen entsprechend der Fertigungsvorgabe durch gesteuertes Verfahren der Kreuzschlitten in X- bzw. Y-Richtung bearbeitet. Die kompakte Bauweise der Schleifvorrichtungen 6 und 41 und das Anbringen der Schleifwerkzeuge 12 und 42 unter einem bestimmten Winkel erlaubt es, diese in geringem Abstand zueinander am Werkstück anzubringen. Dadurch sind sowohl lange als auch schmale Werkstücke gleichzeitig auf beiden Seiten bearbeitbar.

In einer vereinfachten Ausführungsform der Bearbeitungsmaschine ist es auch möglich, anstelle des Trägerbalkens 18 direkt die beiden Konsolen 37 als Träger für den Werkstückspindelstock 20 bzw. den Reitstock 23 zu verwenden, wobei zum Verfahren des Reitstocks 23 die entsprechende Konsole 37 mit einem Schlitten versehen ist. Diese Anordnung ist insbesondere geeignet für Anwendungszwecke, die keine Messeinrichtung 29 und/oder keine Schutzmittel 20 erfordern.

## Patentansprüche

1. Bearbeitungsmaschine zum Bearbeiten von Werkstücken mit einer Werkstückhaltevorrichtung, welche einen Träger (18), einen an einer ersten Seite (27) des Trägers angebrachten Werkstückspindelstock (20) und einen Reitstock umfasst, **dadurch gekennzeichnet, dass** der Reitstock (23) an einer zweiten Seite (28) des Trägers, welche verschieden von der ersten Seite ist, verfahrbar angebracht ist.

2. Bearbeitungsmaschine nach Anspruch 1, **dadurch gekennzeichnet, dass** zwischen dem Werkstückspindelstock (20) und dem Reitstock (23) eine Messeinrichtung (29) am Träger (18) angebracht ist zum Erfassen von Messgrössen während der Bearbeitung eines Werkstücks (26).

3. Bearbeitungsmaschine nach Anspruch 2, **gekennzeichnet durch** bewegbare Schutzmittel (30) zum Schützen der Messeinrichtung (29).

4. Bearbeitungsmaschine nach einem der Ansprüche 1 bis 3, **dadurch gekennzeichnet, dass** der Träger (18) um eine Verschwenkachse (19) verschwenkbar ist.

5. Bearbeitungsmaschine nach einem der Ansprüche 1 bis 4, **dadurch gekennzeichnet, dass** der Winkel (α) zwischen der Vertikalen und der zweiten Seite (28) des Trägers (18), auf welcher der Reitstock (23) angebracht ist, grösser als 0 Grad ist.

6. Bearbeitungsmaschine nach einem der Ansprüche 1 bis 5, **dadurch gekennzeichnet, dass** sie eine Drehvorrichtung (4) zur spanenden Bearbeitung eines Werkstücks (26) und/oder mindestens eine Schleifvorrichtung (5, 6, 41) umfasst.

7. Bearbeitungsmaschine nach Anspruch 6, **dadurch gekennzeichnet, dass** die Schleifvorrichtung (6, 41) ein Schleifwerkzeug (12, 42) umfasst, welches um eine Rotationsachse rotierbar ist, die unter einem Winkel zur Werkstückachse (22) angeordnet ist.

8. Bearbeitungsmaschine nach einem der Ansprüche 6 oder 7, **dadurch gekennzeichnet, dass** die Schleifvorrichtung (5, 6, 41) und/oder Drehvorrichtung (4) entlang mindestens zwei Verfahrachsen (X, Z) verfahrbar ist bzw. sind.

9. Bearbeitungsmaschine nach Anspruch 8, **dadurch gekennzeichnet, dass** die Schleifvorrichtung und die Drehvorrichtung unabhängig voneinander entlang den zwei Verfahrachsen (X, Z) verfahrbar sind.

10. Bearbeitungsmaschine nach einem der Ansprüche 8 oder 9, **dadurch gekennzeichnet, dass** die erste Verfahrachse (Z) im Wesentlichen horizontal ausgerichtet ist und
dass der Winkel (β) zwischen der zweiten Verfahrachse (X) und der Vertikalen grösser als 0 Grad ist.

11. Bearbeitungsmaschine nach einem der Ansprüche 1 bis 10, **gekennzeichnet durch** eine Werkstückgreifervorrichtung (38) zum Aufnehmen von mindestens zwei Werkstücken.

12. Bearbeitungsmaschine nach einem der Ansprüche 1 bis 11, **gekennzeichnet durch** ein Maschinenbett (1, 37), wobei dieses und die Werkstückhaltevorrichtung (18, 20, 23) gegenüber der Horizontalen geneigte Flächen (1a, 27, 28, 37a) umfasst zum Ableiten von bei der Bearbeitung anfallendem Material nach unten.

13. Bearbeitungsmaschine nach einem der Ansprüche 1 bis 12, **dadurch gekennzeichnet, dass** die Werkstückhaltevorrichtung (18, 20, 23) beabstandet zum Maschinenbett (1) an Konsolen (37) befestigt ist.

14. Bearbeitungsmaschine nach Anspruch 13, **dadurch gekennzeichnet, dass** das Maschinenbett (1) als Schrägbett (1a) ausgebildet ist, wobei die Konsolen (37) abgeschrägte Flächen (37a) aufweisen.

15. Bearbeitungsmaschine nach einem der Ansprüche 1 bis 14, **gekennzeichnet durch** eine Auffangvorrichtung (35, 36) zum Auffangen und/oder Abtransportieren von herunterfallendem Material.

## Claims

1. Machine tool for machining workpieces with a workpiece holding device which comprises a support (18), a workpiece spindle headstock (20) mounted on a first side (27) of the support and a tailstock, **characterised in that** the tailstock (23) is movably mounted on a second side (28) of the support which is different from the first side.

2. Machine tool according to claim 1, **characterised in that** a measuring device (29) is fitted to the support (18) between the workpiece spindle headstock (20) and the tailstock (23) to acquire measured variables while machining a workpiece (26).

3. Machine tool according to claim 2, **characterised by** movable protective means (30) for protecting the measuring device (29).

4. Machine tool according to any one of claims 1 to 3, **characterised in that** the support (18) can be pivoted about a pivot axis (19).

5. Machine tool according to any one of claims 1 to 4, **characterised in that** the angle (α) between the vertical and the second side (28) of the support (18) on which the tailstock (23) is fitted is greater than 0 degrees.

6. Machine tool according to any one of claims 1 to 5 **characterised in that** it comprises a turning device (4) for cutting a workpiece (26) and/or at least one grinding device (5, 6, 41).

7. Machine tool according to claim 6, **characterised in that** the grinding device (6, 41) comprises a grinding tool (12, 42) which can rotate.about an axis of rotation which is disposed at an angle to the workpiece axis (22).

8. Machine tool according to either of claims 6 and 7, **characterised in that** the grinding device (5, 6, 41) and/or the turning device (4) can travel along at least two axes of travel (X, Z).

9. Machine tool according to claim 8, **characterised in that** the grinding device and the turning device can travel independently of one another along the two axes of travel (X, Z).

10. Machine tool according to either of claims 8 and 9, **characterised in that** the first axis of travel (Z) is oriented substantially horizontally, and that the angle (β) between the second axis of travel (X) and the vertical is greater than 0 degrees.

11. Machine tool according to any one of claims 1 to 10, **characterised by** a workpiece gripper device (39) for taking up at least two workpieces.

12. Machine tool according to any one of claims 1 to 11, **characterised by** a machine bed (1, 37), wherein the latter and the workpiece holding device (18, 20, 23) comprise faces (1a, 27, 28, 37a) which are inclined with respect to the horizontal for removing material arising during machining in the downward direction.

13. Machine tool according to any one of claims 1 to 12, **characterised in that** the workpiece holding device (18, 20, 23) is fastened to brackets (37) at a spacing from the machine bed (1).

14. Machine tool according to claim 13, **characterised in that** the machine bed (1) is formed as an inclined bed (1a), wherein the brackets (37) have bevelled faces (37a).

15. Machine tool according to any one of claims 1 to 14, **characterised by** a collecting device (35, 36) for collecting and/or carrying away falling material.

## Revendications

1. Machine d'usinage pour usiner des pièces, avec un dispositif porte-pièce comprenant un support (18), une tête de broche (20) agencée sur un premier côté (27) dudit support et une contrepoupée, **caractérisée en ce que** la contrepoupée (23) est agencée de manière déplaçable sur un deuxième côté (28) du support qui est différent du premier côté.

2. Machine d'usinage selon la revendication 1, **caractérisée en ce qu'**entre la tête de broche (20) et la contrepoupée (23), un dispositif de mesure (29) est agencé sur le support (18) pour saisir des grandeurs mesurées pendant l'usinage d'une pièce (26).

3. Machine d'usinage selon la revendication 2, **caractérisée par** des moyens protecteurs (30) déplaçables pour protéger ledit dispositif de mesure (29).

4. Machine d'usinage selon l'une des revendications 1 à 3, **caractérisée en ce que** le support (18) peut pivoter autour d'un axe de pivotement (19).

5. Machine d'usinage selon l'une des revendications 1 à 4, **caractérisée en ce que** l'angle (α) entre la verticale et le deuxième côté (28) du support (18), sur lequel la contrepoupée (23) est agencée, est supérieur à 0 degrés.

6. Machine d'usinage selon l'une des revendications 1 à 5, **caractérisée en ce qu'**elle comprend un dispositif de tournage (4) pour l'usinage d'une pièce (26) par enlèvement de copeaux et/ou au moins un dispositif de rectification (5, 6, 41).

7. Machine d'usinage selon la revendication 6, **caractérisée en ce que** le dispositif de rectification (6, 41) comprend un outil de rectification (12, 42) pouvant être mis en rotation autour d'un axe de rotation qui est agencé à un angle par rapport à l'axe (22) de la pièce.

8. Machine d'usinage selon l'une des revendications 6 ou 7, **caractérisée en ce que** le dispositif de rectification (5, 6, 41) et/ou le dispositif de tournage (4) est/sont déplaçable(s) le long d'au moins deux axes de déplacement (X, Z).

9. Machine d'usinage selon la revendication 8, **caractérisée en ce que** le dispositif de rectification et le dispositif de tournage sont déplaçables indépendamment l'un de l'autre le long desdits deux axes de déplacement (X, Z).

10. Machine d'usinage selon l'une des revendications 8 ou 9, **caractérisée en ce que** le premier axe de déplacement (Z) est orienté essentiellement horizontalement et que l'angle (β) entre le deuxième axe de déplacement (X) et la verticale est supérieur à 0 degrés.

11. Machine d'usinage selon l'une des revendications 1 à 10, **caractérisée par** un dispositif de préhension (38) de pièces pouvant recevoir au moins deux pièces.

12. Machine d'usinage selon l'une des revendications 1 à 11, **caractérisée par** un banc de machine (1, 37), celui-ci et le dispositif porte-pièce (18, 20, 23) présentant des surfaces (1a, 27, 28, 37a) inclinées par rapport à l'horizontale pour amener vers le bas les déchets produits pendant l'usinage.

13. Machine d'usinage selon l'une des revendications 1 à 12, **caractérisée en ce que** le dispositif porte-pièce (18, 20, 23) est fixé à un écart du banc de machine (1) sur des consoles (37).

14. Machine d'usinage selon la revendication 13, **caractérisée en ce que** le banc de machine (1) est réalisé sous la forme d'un banc incliné (1a), les consoles (37) ayant des surfaces (37a) chanfreinées.

15. Machine d'usinage selon l'une des revendications 1 à 14, **caractérisée par** un dispositif de réception (35, 36) pour recueillir et/ou débarrasser les déchets qui tombent par terre.
